# EUROPÄISCHE PATENTSCHRIFT

(11) **EP 1 409 114 B1**
(45) Veröffentlichungstag und Bekanntmachung des Hinweises auf die Patenterteilung: **13.04.2005**
(21) Anmeldenummer: 02750894.4
(22) Anmeldetag: 07.05.2002
(51) Int. Cl.: B01D 53/14

(54) **VERFAHREN ZUR REINIGUNG VON KOKEREIGAS**
METHOD FOR CLEANING COKE OVEN GAS
PROCEDE D'EPURATION DE GAZ DE COKERIE

(30) Priorität: 09.05.2001 DE 10122546
(43) Veröffentlichungstag der Anmeldung: 21.04.2004
(73) Patentinhaber: Uhde GmbH, 44141 Dortmund (DE)
(72) Erfinder: THIELERT, Holger, 44379 Dortmund (DE)
(74) Vertreter: Albrecht, Rainer Harald, Dr.-Ing.
(86) Internationale Anmeldenummer: PCT/EP2002/005019
(87) Internationale Veröffentlichungsnummer: WO 2002/089958

(56) Entgegenhaltungen:
- DE-A- 2 537 640
- DE-A- 2 734 497
- DE-A- 3 004 757
- DE-A- 19 603 837
- GB-A- 2 057 411
- US-A- 4 499 060

## Beschreibung

Die Erfindung betrifft ein Verfahren zur Reinigung von Kokereigas durch Gaswäsche, wobei eine Waschflüssigkeit in einem Waschflüssigkeitskreislauf geführt wird und in einem Desorber Verunreinigungen aus der Waschflüssigkeit ausgetrieben werden. Ein solches Verfahren ist aus Chemie-Ingenieur-Technik (1974) 15, Seite 628, bekannt.

Bei dem bekannten Verfahren erfolgt die Gaswäsche mit einer ammoniakhaltigen Waschflüssigkeit, die eine Anreicherung von Ammoniak im Waschflüssigkeitskreislauf zwischen Gaswäscher und Desorber bewirkt. Vor dem Desorber wird Natronlauge dem Waschflüssigkeitskreislauf zugegeben, um nicht strippbare Ammoniumsalze in Ammoniak und NaCl aufzuspalten. Die Desorption wird zweistufig betrieben. Aus der beladenen Waschflüssigkeit werden in einer ersten Desorptionsstufe die Sauergasbestandteile abgetrieben. Ein Teilstrom des aus dem Desorber abgezogenen Flüssigkeitsstroms wird einem zweiten Desorber zugeführt, in dem mit Dampf Ammoniak ausgetrieben wird. Das hier ausgetriebene Ammoniak wird dem Waschflüssigkeitskreislauf wieder zugeführt. Die zweistufige Desorption ist verfahrens- und regelungstechnisch aufwendig, da einerseits eine vollständige Abtrennung der Sauergasbestandteile angestrebt wird und gleichzeitig eine ausreichende Menge Ammoniak im Waschflüssigkeitskreislauf verbleiben muss.

Ein weiteres Verfahren ist aus der DE 27 34 497 A1 bekannt. Gegenstand ist ein Verfahren zur Reinigung von Kohlendestillationsgasen, bei dem mit Hilfe von Nationlange Schwefelwarsserstoff und mit Hife von wasser Ammoniak aus dem Gasstrom ausgewaschen wird. Die Abtrennung von NH₃ bzw. H₂S erfolgt durch jeweil unterschiedliche Waschflüssigkeiten.

Der Erfindung liegt die Aufgabe zugrunde, ein Verfahren zur Reinigung von Kokereigas durch Gaswäsche anzugeben, das regelungstechnisch leichter beherrscht werden kann.

Ausgehend von dem eingangs beschriebenen Verfahren wird die Aufgabe erfindungsgemäß dadurch gelöst, dass das Kokereigas im Gegenstrom mit Natronlauge gewaschen wird und dass die Natronlauge im Desorber durch Austreiben von Sauergasbestandteilen sowie Ammoniak regeneriert wird. Erfindungsgemäß arbeitet der Desorber als Totaldesorber. Hier werden alle Sauergasbestandteile sowie Ammoniak ausgetrieben, so dass nur noch Natronlauge in der flüssigen Phase verbleibt. Absorbensverluste werden durch Zugabe von NaOH, das vorzugsweise der regenerierten Natronlauge vor der Gaswäsche zugeführt wird, ausgeglichen. Aus dem Waschflüssigkeitskreislauf wird ein Natriumsalz enthaltendes Abwasser abgezogen. Der Flüssigkeitsverlust wird vorzugsweise durch im Kokereibetrieb anfallendes Kohlewasser, das Ammoniumbestandteile enthalten kann, ersetzt.

Es bestehen verschiedene Möglichkeiten der weiteren Ausgestaltung des erfindungsgemäßen Verfahrens. Gemäß einer bevorzugten Ausführung wird die Gaswäsche zweistufig betrieben und umfasst eine erste alkalische Waschstufe für die Sauergasbestandteile sowie eine zweite im neutralen bis sauren pH-Bereich arbeitende Waschstufe zur Absorption von Ammoniak. Die Natronlauge wird am Kopf der ersten Waschstufe aufgegeben, während das zu reinigende Kokereigas am Fuß der zweiten Waschstufe zugeführt wird, die beiden Waschstufen nacheinander durchströmt und am Kopf der ersten Waschstufe abgezogen wird. Die aus der ersten Waschstufe abströmende Waschflüssigkeit wird einem oberen Abschnitt der zweiten Waschstufe zugeführt. Bei der erfindungsgemäßen Ausführung wird die Natronlauge zunächst als Waschflüssigkeit zur Absorption von Sauergasbestandteilen, insbesondere H₂S, genutzt. Durch die Absorption der Sauergasbestandteile nimmt der pH-Wert der Waschflüssigkeit ab, so dass die Waschflüssigkeit in der zweiten Waschstufe zur Absorption von Ammoniak genutzt werden kann. Die aus der zweiten Waschstufe ablaufende Flüssigkeit wird dem Desorber zugeführt und hier durch Austreiben sämtlicher Sauergasbestandteile sowie des Ammoniaks regeneriert. Die beiden Waschstufen können als separate Absorber ausgeführt sein oder auch in einem Apparat integriert sein.

Eine andere Ausgestaltung des erfindungsgemäßen Verfahrens sieht vor, dass das zu reinigende Kokereigas in einem ersten Absorber mit Natronlauge gewaschen und anschließend einem zweiten Absorber zugeführt wird, in dem Ammoniak aus dem Gasstrom abgetrennt wird. Lediglich die Waschflüssigkeit aus dem ersten Absorber wird dem Desorber zugeführt, in dem die Natronlauge regeneriert und Sauergase sowie Ammoniak ausgetrieben werden. Die regenerierte Natronlauge wird in einer Trennstufe in einen in den ersten Absorber zurückgeführten Konzentratstrom und einen im wesentlichen NaOH-freien Flüssigkeitsstrom aufgetrennt. Der NaOH-freie Flüssigkeitsstrom wird als Waschflüssigkeit dem zweiten Absorber zugeführt und hier zur Absorption von Ammoniak benutzt. Die aus dem zweiten Absorber abgezogene Waschflüssigkeit wird in den ersten Absorber zurückgeführt. Die Trennstufe wird vorzugsweise als Umkehrosmose betrieben, wobei Umkehrosmosemembranen verwendet werden, die ein hohes Rückhaltevermögen für NaOH aufweisen. Das Rückhaltevermögen beträgt je nach Membrantyp etwa 99 bis 99,5%. Bei zweistufiger Ausführung der Umkehrosmoseanlage sind auch Membranen mit einem geringeren Rückhaltevermögen für NaOH einsetzbar.

Der Desorber wird bei beiden, zuvor beschriebenen Verfahrensvarianten vorzugsweise als Vakuumdestillation betrieben. In weiterer Ausgestaltung lehrt die Erfindung, dass aus der den Desorber verlassenden regenerierten Natronlauge ein Teilstrom ausgeschleust und mit Kohlewasser aus dem Kokereibetrieb einem Verdampfer zugeführt wird, in dem die Flüssigkeit aufkonzentriert und ein dem Desorber zugeführter Dampfstrom erzeugt wird. Der im Verdampfer aufkonzentrierte Flüssigkeitsstrom wird als Abwasser abgezogen.

Das nach dem erfindungsgemäßen Verfahren gereinigte Kokereigas weist einen H₂S-Gehalt von weniger als 0,5 g/Nm³ auf. Dabei sind aufgrund der großen Waschaktivität der erfindungsgemäß verwendeten Natronlauge auch Werte unter 0,1 g/Nm³ erreichbar. Etwaige geringe Restmengen an Sauergasbestandteilen können in einem nachgeschalteten Feinwäscher ausgewaschen werden. Gemäß einer bevorzugten Ausführung der Erfindung wird der Feinwäscher zumindest teilweise mit der aus dem Verdampfer abgezogenen Waschflüssigkeit betrieben, wobei die aus dem Feinwäscher abgezogene Flüssigkeit in den Verdampfer zurückgeführt wird.

Im Folgenden wird die Erfindung anhand einer lediglich ein Ausführungsbeispiel darstellenden Zeichnung erläutert. Es zeigen
- Fig. 1: das Anlageschema eines erfindungsgemäßen Verfahrens zur Reinigung von Kokereigas,
- Fig. 2: eine weitere Ausgestaltung des erfindungsgemäßen Verfahrens.

Bei dem in den Figuren dargestellten Verfahren wird ein Kokereigas COG, das H₂S und NH₃ als Verunreinigungen enthält, durch Gaswäsche gereinigt. Dabei müssen insbesondere Schwefelverbindungen und Ammoniak aus dem Gasstrom nahezu vollständig entfernt werden.

Bei dem erfindungsgemäßen Verfahren wird das Kokereigas COG im Gegenstrom mit Natronlauge NaOH gewaschen. In einem Desorber 1 wird die Natronlauge anschließend durch Austreiben aller Sauergasbestandteile H₂S sowie durch Austreiben von Ammoniak NH₃ regeneriert. Sie wird in einem Waschflüssigkeitskreislauf 2 geführt und erneut zur Gaswäsche eingesetzt. Der Verbrauch von Absorbens wird durch Zugabe von NaOH ausgeglichen. Ferner wird aus dem Waschflüssigkeitskreislauf 2 ein Natriumsalze enthaltendes Abwasser abgezogen. Der Flüssigkeitsverlust wird durch im Kokereibetrieb anfallendes Kohlewasser, das Ammoniumsalze enthalten kann, ersetzt.

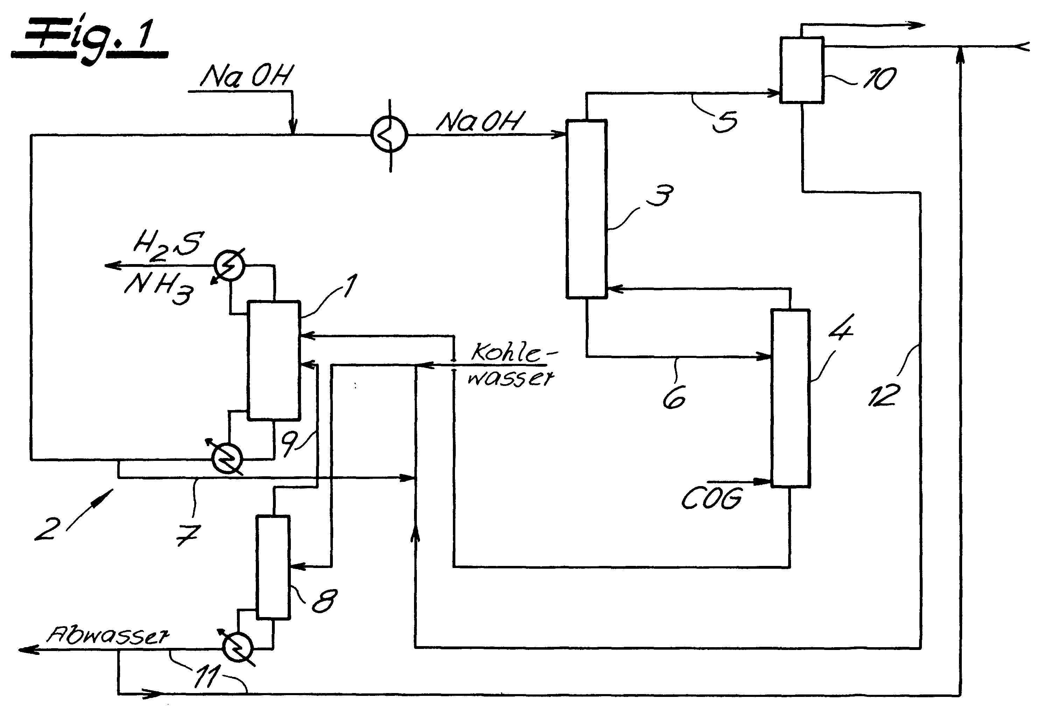

Bei der in Fig. 1 dargestellten Ausführung des erfindungsgemäßen Verfahrens wird die Gaswäsche zweistufig betrieben. Sie umfasst eine erste alkalische Waschstufe 3 für die Sauergasbestandteile, insbesondere H₂S, sowie eine zweite, im neutralen bis sauren pH-Bereich arbeitende Waschstufe 4 zur Absorption von Ammoniak. Die Natronlauge wird am Kopf der ersten Waschstufe aufgegeben. Das zur reinigende Kokereigas wird am Fuß der zweiten Waschstufe zugeführt, durchströmt die beiden Waschstufen nacheinander und wird am Kopf der ersten Waschstufe als gereinigter Gasstrom 5 abgezogen. Die aus der ersten Waschstufe 3 abströmende Waschflüssigkeit 6 wird einem oberen Abschnitt der zweiten Waschstufe 4 zugeführt. Im Ausführungsbeispiel sind die Waschstufen 3, 4 als separate Gaswäscher ausgebildet, die durch dampfund flüssigkeitsführende Leitungen miteinander verbunden sind. Die Gaswäscher 3, 4 enthalten übliche Einbauten zur Verbesserung des Stoffaustausches. Im Rahmen der Erfindung liegt es auch, die beiden Gaswäscher zu einem Apparat zu vereinigen.

Der Desorber 1 wird als Vakuumdestillation betrieben. Aus der den Desorber verlassenden regenerierten Natronlauge wird ein Teilstrom 7 ausgeschleust und mit Kohlewasser aus dem Kokereibetrieb einem Verdampfer 8 zugeführt, in dem die Flüssigkeit aufkonzentriert und ein dem Desorber 1 zugeführter Dampfstrom 9 erzeugt wird. Die aufkonzentrierte Flüssigkeit wird als Abwasser abgezogen.

Bei dem in Fig. 1 dargestellten Ausführungsbeispiel ist noch ein Feinwäscher 10 vorgesehen, in dem etwaige geringe Restmengen an Sauergasbestandteilen aus dem gereinigten Gas ausgewaschen werden. Der Feinwäscher 10 wird zumindest teilweise mit der aus dem Verdampfer 8 abgezogenen Flüssigkeit 11 betrieben. Die aus dem Feinwäscher 10 abgezogene Flüssigkeit 12 wird in den Verdampfer zurückgeführt.

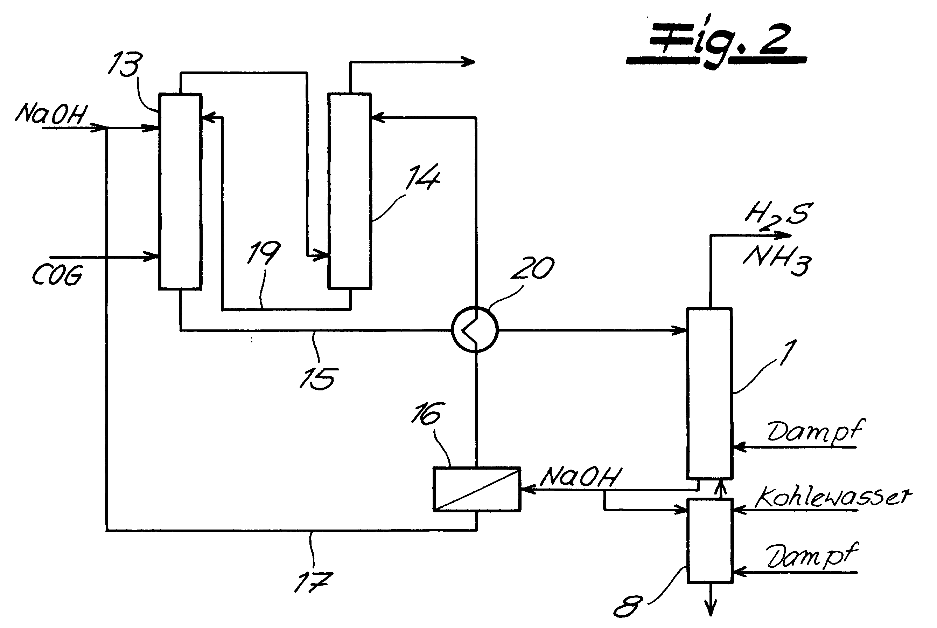

In Fig. 2 ist eine Verfahrensvariante des erfindungsgemäßen Verfahrens dargestellt. Bei dem in Fig. 2 dargestellten Verfahren wird das zu reinigende Kokereigas COG in einem ersten Absorber 13 mit Natronlauge NaOH gewaschen und anschließend einem zweiten Absorber 14 zugeführt, in dem Ammoniak aus dem Gasstrom abgetrennt wird. Lediglich die Waschflüssigkeit 15 aus dem ersten Absorber 13 wird dem Desorber 1 zugeführt, in dem die Natronlauge NaOH regeneriert und H₂S sowie Ammoniak NH₃ ausgetrieben werden. Die regenerierte Natronlauge NaOH wird in einer Trennstufe 16 in einen in den ersten Absorber 13 zurückgeführten Konzentratstrom 17 und einen im wesentlichen NaOH-freien Flüssigkeitsstrom 18 aufgetrennt. Diese wird als Waschflüssigkeit dem zweiten Absorber 14 zugeführt und zur Absorption von Ammoniak genutzt. Die Trennstufe 16 besteht vorzugsweise aus einer Umkehrosmoseanlage, die Umkehrosmosemembrane mit einem hohen Rückhaltevermögen für NaOH enthält. Das Rückhaltevermögen für NaOH beträgt vorzugsweise mindestens 99%. Die aus dem zweiten Absorber 14 abgezogene Waschflüssigkeit 19 wird in den ersten Absorber 13 zurückgeführt. Schließlich entnimmt man der Fig. 2, dass im Zulauf zum Desorber 1 ein Wärmeaustauscher 20 angeordnet ist, in dem ein Wärmeaustausch zwischen dem Permeatstrom 18 der Umkehrosmose und dem Zulauf 15 zum Desorber 1 erfolgt.

An den Desorber 1 ist ein Verdampfer 8 angeschlossen, dem Kohlewasser, ein aus der regenerierten Natronlauge abgezweigter Teilstrom sowie Dampf zugeführt wird. Durch die Zugabe von Natronlauge werden nicht strippbare Ammoniumsalze in Ammoniak und NaCl gespalten. Freigesetztes Ammoniak wird im Desorber 1 gestrippt. An der Unterseite des Verdampfers 8 wird ein aufkonzentrierter Abwasserstrom abgezogen.

## Patentansprüche

1. Verfahren zur Reinigung von Kokereigas durch Gaswäsche, wobei Natronlauge als Waschflüssigkeit in einem Waschflüssigkeitskreislauf geführt wird und in einem Desorber zur Regenerierung der Natronlauge Verunreinigungen aus der Waschflüssigkeit ausgetrieben werden und wobei das Kokereigas im Gegenstrom mit der Waschflüssigkeit gewaschen wird, **dadurch gekennzeichnet, dass** die Gaswäsche zweistufig betrieben wird und eine erste alkalische Waschstufe für die Sauergasbestandteile sowie eine zweite, im neutralen bis sauren pH-Bereich arbeitende Waschstufe zur Absorption von Ammoniak umfasst,
wobei das zu reinigende Kokereigas am Fuß der zweiten Waschstufe zugeführt wird, die beiden Waschstufen nacheinander durchströmt und am Kopf der ersten Waschstufe abgezogen wird,
wobei die Natronlauge am Kopf der ersten Waschstufe aufgegeben wird,
wobei die aus der ersten Waschstufe abströmende Waschflüssigkeit einem oberen Abschnitt der zweiten Waschstufe zugeführt wird, und
wobei durch die Absorption der Sauergasbestandteile der pH-Wert der Waschflüssigkeit so weit abgesenkt wird, dass die Waschflüssigkeit in der zweiten Waschstufe zur Absorption von Ammoniak genutzt werden kann.

2. Verfahren zur Reinigung von Kokereigas durch Gaswäsche, wobei Natronlauge als Waschflüssigkeit in einem Waschflüssigkeitskreislauf geführt wird und in einem Desorber zur Regenerierung der Natronlauge Verunreinigungen aus der Waschflüssigkeit ausgetrieben werden und wobei das Kokereigas im Gegenstrom mit der Waschflüssigkeit gewaschen wird, **dadurch gekennzeichnet,**
**dass** das zu reinigende Kokereigas in einem ersten Absorber mit der Natronlauge gewaschen und anschließend einem zweiten Absorber zugeführt wird, in dem Ammoniak aus dem Gasstrom abgetrennt wird,
**dass** die Waschflüssigkeit aus dem ersten Absorber dem Desorber zugeführt wird, in dem die Natronlauge regeneriert und Sauergase sowie Ammoniak ausgetrieben werden,
**dass** die regenerierte Natronlauge in einer Trennstufe in einen in den ersten Absorber zugeführten Konzentratstrom und einen im Wesentlichen NaOH-freien Waschflüssigkeitsstrom für den zweiten Absorber aufgetrennt wird, und
**dass** die aus dem zweiten Absorber abgezogene Waschflüssigkeit in den ersten Absorber zurückgeführt wird.

3. Verfahren nach Anspruch 2, **dadurch gekennzeichnet, dass** die Trennstufe als Umkehrosmose betrieben wird und Umkehrosmosemembranen verwendet werden, die ein hohes Rückhaltevermögen für NaOH aufweisen.

4. Verfahren nach Anspruch 1 bis 3, **dadurch gekennzeichnet, dass** ein Natriumsalz enthaltenes Abwasser aus dem Waschflüssigkeitskreislauf abgezogen und der Flüssigkeitsverlust durch im Kokereibetrieb anfallendes Kohlewasser ersetzt wird.

5. Verfahren nach einem der Ansprüche 1 bis 4, **dadurch gekennzeichnet, dass** der Desorber als Vakuumdestillation betrieben wird.

6. Verfahren nach einem der Ansprüche 1 bis 5, **dadurch gekennzeichnet, dass** aus der den Desorber verlassenden regenerierten Natronlauge ein Teilstrom ausgeschleust und mit Kohlewasser aus dem Kokereibetrieb einem Verdampfer zugeführt wird, in dem die Flüssigkeit aufkonzentriert und ein dem Desorber zugeführter Dampfstrom erzeugt wird.

7. Verfahren nach einem der Ansprüche 1 bis 6, **dadurch gekennzeichnet, dass** das gereinigte Gas einem nachgeschalteten Feinwäscher zugeführt wird, in dem etwaige geringe Restmengen an Saugergasbestandteilen ausgewaschen werden.

8. Verfahren nach Anspruch 6 oder 7, **dadurch gekennzeichnet, dass** der Feinwäscher zumindest teilweise mit der aus dem Verdampfer abgezogenen Flüssigkeit betrieben wird und dass die aus dem Feinwäscher abgezogene Flüssigkeit in den Verdampfer zurückgeführt wird.

## Claims

1. A method for purifying coke-oven gas by gas washing, wherein caustic soda is fed in a washing liquid circuit as washing liquid and in a desorber impurities are driven out of the washing liquid to regenerate the caustic soda, and wherein the coke-oven gas is washed with the washing liquid in the counterflow, **characterised in that** the gas washing is operated in two stages and comprises a first alkaline washing stage for the acid gas constituents and a second washing stage operating in the neutral to acid pH range for the absorption of ammonia,
wherein the coke-oven gas to be purified is supplied at the foot of the second washing stage, flows through the two washing stages one after the other and is withdrawn at the head of the first washing stage,
wherein the caustic soda is delivered at the head of the first washing stage,
wherein the washing liquid flowing from the first washing stage is fed to an upper section of the second washing stage and
wherein the pH of the washing liquid is reduced by the absorption of the acid gas constituents to such an extent that the washing liquid in the second washing stage can be used to absorb ammonia.

2. A method for purifying coke-oven gas by gas washing, wherein caustic soda is fed in a washing liquid circuit as washing liquid and in a desorber impurities are driven out of the washing liquid to regenerate the caustic soda, and wherein the coke-oven gas is washed with the washing liquid in the counterflow, **characterised in**
**that** the coke-oven gas to be purified is washed with the caustic soda in a first absorber, and is then fed to a second absorber in which ammonia is separated from the gas stream,
**that** the washing liquid from the first absorber is fed to the desorber in which the caustic soda is regenerated and acid gases and ammonia are expelled,
**that** the regenerated caustic soda is separated in a separating stage into a concentrate flow fed into the first absorber and a substantially NaOH-free washing liquid flow for the second absorber, and
**that** the washing liquid withdrawn from the second absorber is fed back into the first absorber.

3. The method according to claim 2, **characterised in that** the separating stage is operated as reverse osmosis and reverse osmosis membranes are used which have a high retention capacity for NaOH.

4. The method according to claim 1 to 3, **characterised in that** waste water containing a sodium salt is withdrawn from the washing liquid circuit and the liquid loss is replaced by coal water which accumulates during operation of the coking plant.

5. The method according to any one of claims 1 to 4, **characterised in that** the desorber is operated as vacuum distillation.

6. The method according to any one of claims 1 to 5, **characterised in that** from the regenerated caustic soda leaving the desorber, a partial flow is discharged and fed with coal water from the operation of the coking plant to a vaporiser in which the liquid is concentrated and a vapour flow fed to the desorber is produced.

7. The method according to any one of claims 1 to 6, **characterised in that** the purified gas is fed to a following fine washer in which any small residual quantities of acid gas constituents are washed out.

8. The method according to claim 6 or 7, **characterised in that** the fine washer is operated at least partly with the liquid withdrawn from the vaporiser and that the liquid withdrawn from the fine washer is fed back into the vaporiser.

## Revendications

1. Procédé de purification de gaz de cokerie par lavage au gaz, dans lequel la soude caustique servant de liquide de lavage est guidée dans un circuit de liquide de lavage et les impuretés dont éliminées du liquide de lavage dans un désorbeur servant à régénérer la soude caustique et le gaz de cokerie est lavé à contre-courant au liquide de lavage, **caractérisé en ce que** le gaz de lavage est utilisé à deux étages et comprend un premier étage de lavage alcalin pour les composantes de gaz acide ainsi qu'un deuxième étage opérationnel dans la plage de pH allant de neutre à acide pour l'absorption d'ammoniaque,
le gaz de cokerie à purifier étant guidé au bas du deuxième étage de lavage, traversant l'un après l'autre les deux étages de lavage et étant extrait au sommet du premier étage de lavage,
la soude caustique étant versée au sommet du premier étage de lavage,
le liquide de lavage s'écoulant du premier étage de lavage étant acheminé à une section supérieure du deuxième étage de lavage, et
la valeur de pH du liquide de lavage étant, par absorption des composantes de gaz acide, diminuée de manière à ce que le liquide de lavage, au deuxième étage de lavage, puisse être utilisé pour l'absorption d'ammoniaque.

2. Procédé de purification de gaz de cokerie par lavage au gaz, dans lequel de la soude caustique servant de liquide de lavage est guidée dans un circuit de liquide de lavage et les impuretés sont éliminées du liquide de lavage dans un désorbeur servant à régénérer la soude caustique et le gaz de cokerie est lavé à contre-courant au liquide de lavage, **caractérisé en ce que**
le gaz de cokerie à purifier est lavé à la soude caustique dans un premier absorbeur puis acheminé à un deuxième absorbeur, où l'ammoniaque est séparé du flux gazeux,
le liquide de lavage provenant du premier absorbeur est acheminé au désorbeur, où la soude caustique est régénérée et les gaz acides ainsi que l'ammoniaque sont éliminés,
la soude caustique régénérée est, à un premier étage de division, divisée en un flux de concentré acheminé au premier absorbeur et en un flux de liquide de lavage sensiblement exempt de NaOH pour le deuxième absorbeur, et
que le liquide de lavage extrait du deuxième absorbeur est reconduit dans le premier absorbeur.

3. Procédé selon la revendication 2, **caractérisé en ce que** l'étage de division fonctionne comme une osmose inverse et qu'on utilise des membranes d'osmose inverse qui présentent une haute capacité de rétention pour le NaOH.

4. Procédé selon les revendications 1 à 3, **caractérisé en ce qu'**une eau usée contenant un sel sodique est extraite du circuit de liquide de lavage et que la perte de liquide est compensée par de l'eau carbonée se formant pendant la cokéfaction.

5. Procédé selon l'une quelconque des revendications 1 à 4, **caractérisé en ce que** le désorbeur fonctionne comme une distillation sous vide.

6. Procédé selon l'une quelconque des revendications 1 à 5, **caractérisé en ce qu'**un flux partiel est dévié de la soude caustique régénérée quittant le désorbeur et acheminé avec l'eau carbonée provenant de la cokéfaction vers un vaporisateur où le liquide est concentré et où un flux de vapeur acheminé au désorbeur est généré.

7. Procédé selon l'une quelconque des revendications 1 à 6, **caractérisé en ce que** le gaz purifié est acheminé à un système de lavage fin installé en aval, où les éventuelles quantités résiduelles de composantes de gaz acide sont éliminées.

8. Procédé selon la revendication 6 ou 7, **caractérisé en ce que** le système de lavage fin fonctionne du moins partiellement avec le liquide extrait du vaporisateur et que le liquide extrait du système de lavage fin est reconduit dans le vaporisateur.
